# EUROPÄISCHE PATENTSCHRIFT

(11) **EP 0 636 798 B1**
(45) Veröffentlichungstag und Bekanntmachung des Hinweises auf die Patenterteilung: **25.03.1998**
(21) Anmeldenummer: 94107091.4
(22) Anmeldetag: 18.05.1994
(51) Int. Cl.: F16B 21/02, F16B 5/10

(54) **Drehverschluss**
Rotational fastener
Elément de fixation rotatif

(30) Priorität: 28.07.1993 DE 9311243 U
(43) Veröffentlichungstag der Anmeldung: 01.02.1995
(73) Patentinhaber: Fairchild Fasteners Europe - Camloc GmbH, 65779 Kelkheim (DE)
(72) Erfinder: Stölken, Hans Jochen, D-65719 Hofheim (DE); Filitz, Wolfhard, D-61381 Friedrichsdorf (DE)
(74) Vertreter: KEIL & SCHAAFHAUSEN Patentanwälte

(56) Entgegenhaltungen:
- FR-A- 2 349 055
- US-A- 2 797 464
- US-A- 3 673 913
- US-A- 4 145 862
- US-A- 4 442 571
- PATENT ABSTRACTS OF JAPAN vol. 017, no. 346 (M-1437), 30.Juni 1993 & JP-A-05 044708 (FUJITSU LTD), 23.Februar 1993,
- "INDUSTRIAL FASTENERS HANDBOOK" , TRADE & TECHNICAL PRESS LIMITED , MORDEN, SURREY, ENGLAND XP002004719 2. Auflage 1980 * Seite 368; Abbildung 1 *
- ENGINEERING MATERIALS AND DESIGN, Bd. 26, Nr. 5, Mai 1982, LONDON, UK, Seiten 24-27, XP002004718 HOUSTON, JOHN: "Fast fixing with quick release "

## Beschreibung

Die Erfindung bezieht sich auf einen Drehverschluß, insbesondere Vierteldrehverschluß, für das lösbare Verbinden von z.B. plattenförmigen Bauteilen, wie eines Deckels an einem Gehäuse, mit einem Verschlußzapfen, welcher sich z.B. mittels dessen Zapfenkopfs über ein Federelement auf dem einen Bauteil abstützt, dessen Zapfenschaft durch zueinander fluchtende Formlöcher der Bauteile ragt und an seinem freien Ende vorzugsweise diametral einander gegenüberliegende Verriegelungsvorsprünge trägt, welche beim Ansetzen des einen Bauteils gegen das andere Bauteil in das Formloch des anderen Bauteils einführbar, gegen die Rückstellkraft des Federelements axial durch das Formloch des anderen Bauteils hindurchführbar und durch anschließendes Drehen des Verschlußzapfens um einen Winkel von z.B. 90° in eine Verriegelungsstellung hinter dem anderen Bauteil überführbar sind.

Aus der DE 36 12 199 A1 ist eine lösbare Befestigung eines plattenförmigen Bauteils an einer Unterlage mit zum Bauteil hin offener T-Nut, bestehend aus einer Aufnahme, einem Kopfbolzen, einem in der Aufnahme angeordneten Federelement und einem am freien Schaftende des Kopfbolzens angeordneten Querriegel, der in die T-Nut einführbar, in Richtung des Nutbodens gegen die Kraft des Federelements bewegbar und durch Drehen um 90° hinter den Schultern der T-Nut verrastbar ist bekannt, bei welcher der Bolzen vor dem den Querriegel tragenden Schaftende mindestens einen mit einer Öffnungskante der T-Nut zusammenwirkenden Anschlag aufweist, der den Bolzen nach Erreichen der Verriegelungsstellung am Weiterdrehen hindert und bei welcher die Aufnahme und der Bolzen mit zusammenwirkenden Führungsmitteln in der Weise versehen sind, daß der Querriegel aus seiner Verriegelungsstellung durch eine Drehbewegung um 90° zwangsläufig in seine entriegelte Stellung bewegbar ist. Eine derartige Vorrichtung setzt neben dem Kopfbolzen und dem Federelement ein gesondertes Aufnahmeelement für diese beiden Teile voraus und ist lediglich für die Befestigung eines plattenförmigen Bauteils an einer Unterlage mit zum Bauteil hin offener T-Nut bestimmt.

Aus der DE 36 02 633 C2 ist ein Drehverschluß für das lösbare Verbinden plattenförmiger Bauteile bekannt, welcher außer einem Kopfbolzen die Verwendung eines gesonderten Halters erfordert. Dieser Halter zum bajonettartigen Verbinden der plattenförmigen Bauteile im Zusammenwirken mit dem am Schaftende mit einem Querteil versehenen Kopfbolzen, der durch ein diametral erweitertes Loch im Mittelsteg des sich mit den Enden seiner beiden mit dem Mittelsteg durch axial hin- und zurückgebogenen Schlaufen verbundenen Schenkel gegen die Rückseite der Bauteile abstützenden Halters hindurchsteckbar und durch eine kurze Drehung mit den Querteilen über in Umfangsrichtung an die Locherweiterungen anschließende Rampen hinweg in Vertiefungen einrastbar ist, besteht derart aus Federblech, daß die Schenkel an ihren beiden Längskanten um 90° zur Rückseite hin abgebogene rechteckige Fortsätze besitzen und diese in ihren den Schlaufen gegenüberliegenden Bereichen als um mehr als 90° abgebogene Laschen enden. Auf diese Weise läßt sich der Halter in eine Öffnung des ersten Bauteils einclipsen.

Ein weiterer Drehverschluß gemäß Oberbegriff von Anspruch 1 ist aus US-A-4 442 571 bekannt.

Aufgabe der vorliegenden Erfindung ist es, einen Drehverschluß der eingangs genannten Art zu schaffen, welcher einen geringeren Fertigungs- und Montageaufwand erfordert und dennoch ein vibrationssicheres Zusammenhalten der Bauteile gewährleistet. Derartige Drehverschlüsse sind insbesondere im Kraftfahrzeugbau, Maschinenbau und der Elektrotechnik bspw. für die Befestigung von Deckeln oder Verkleidungen an einem Gehäuse oder einer Unterlage erwünscht.

Diese Aufgabe wird erfindungsgemäß bei einem Drehverschluß der eingangs genannten Art im wesentlichen dadurch gelöst, daß der Zapfenschaft im Abstand von dem Zapfenkopf einen ersten Anschlagvorsprung trägt, welcher bei einem vollständigen Eindrücken des Verschlußzapfens gegen die Rückstellkraft des Federelements aus einer Öffnungsstellung aus einem Sperrschlitz des Formlochs des ersten Bauteils aushebbar ist, daß der Zapfenschaft einen zweiten, in geringerem Abstand von dem Zapfenkopf beginnenden Anschlagvorsprung trägt, welcher bei dem Eindrücken des Verschlußzapfens gegen die Rückstellkraft des Federelements aus der Öffnungsruhestellung in einer Formaussparung des Formlochs des ersten Bauteils verbleibt, welche das anschließende Drehen des Verschlußzapfens nur in einer Richtung um einen vorgegebenen Winkel von z.B. 90° in eine Verriegelungsstellung gestattet, daß das Formloch des zweiten Bauteils radiale Randaussparungen für den Durchtritt der Verriegelungsvorsprünge und im übrigen einen geringeren Durchmesser aufweist, welcher jedoch das Verdrehen des Verschlußzapfens bei seinem vollständigen Eindrücken gegen die Rückstellkraft des Federelements trotz der Anschlagvorsprünge gestattet, und daß sich in der unter der Rückstellkraft des Federelements gesicherten Verriegelungsstellung des Verschlußzapfens der erste Anschlagvorsprung wenigstens teilweise in einem ihm zugeordneten Arretierungsschlitz des Formlochs des ersten Bauteils befindet.

Für einen solchen Drehverschluß ist bei der entsprechenden Ausgestaltung der Formlöcher in den Bauteilen außer dem Federelement nur ein einziges Bauteil, nämlich der Verschlußzapfen erforderlich. Die Montage und Bedienung ist denkbar einfach. Zunächst wird der Verschlußzapfen durch das entsprechende Formloch in das erste Bauteil eingefügt und ggf. in eine Öffnungsruhestellung verdreht, in welcher sich die Verriegelungsvorsprünge auf der Rückseite des ersten Bauteils unter der Wirkung des Federelements abstützen. Dann wird das erste Bauteil an das zweite Bauteil in einer solchen Orientierung des Verschlußzapfens relativ zu der Lage des Formlochs in dem zweiten Bauteil angesetzt, daß dieser mit seinen Verriegelungsvorsprüngen in das Formloch des zweiten Bauteils eintreten kann. Ein Eindrücken des Verschlußzapfens gegen die Rückstellkraft des Federelements sorgt dann dafür, daß die Verriegelungsvorsprünge aus dem Formloch des zweiten Bauteils und der erste Anschlagvorsprung aus seinem Sperrschlitz in dem ersten Bauteil heraustreten, so daß der Verschlußzapfen um einen vorbestimmten Winkel von z.B. 90° in seine Verriegelungsstellung gedreht werden kann, in welcher sich dann die Verriegelungsvorsprünge unter der Rückstellkraft des Federelements an die Rückseite des zweiten Bauteils anlegen, wenn kein axialer Druck mehr auf den Zapfenkopf einwirkt. In dieser Verriegelungsstellung rastet der erste Anschlagvorsprung in den ihm zugeordneten Arretierungsschlitz des Formlochs des ersten Bauteils ein. In umgekehrter Reihenfolge dieser Schritte ist der Drehverschluß und damit das erste Bauteil von dem zweiten Bauteil wieder zu lösen. Der zweite Anschlagvorsprung sorgt aufgrund seiner Positionierung und Länge relativ zu den Formlöchern in den beiden Bauteilen dafür, daß trotz Aushebens des ersten Anschlagvorsprungs gegen die Rückstellkraft des Federelements aus seinen jeweiligen Sperrstellungen der Verschlußzapfen immer nur in einer Richtung um einen vorbestimmten Winkel verdreht werden kann, und zwar zum Verriegeln in eine Richtung und zum Entriegeln in die entgegengesetzte Richtung. Hierdurch ist eine hohe Montage- und Bedienungssicherheit gewährleistet.

In besonderer Ausgestaltung des Erfindungsgedankens bildet dabei die Formaussparung des Formlochs des ersten Bauteils eine Anschlagfläche für den zweiten Anschlagvorsprung zur Begrenzung der Drehbewegung des Verschlußzapfens in Verriegelungsstellung.

Für einen Vierteldrehverschluß sind die Anschlagvorsprünge zweckmäßigerweise diametral einander gegenüberliegend am Umfang des Zapfenschafts vorgesehen.

Die angestrebten Funktionen der Sperrung und Entsperrung mittels des ersten Anschlagvorsprunges sowie der Definition der Drehrichtung und des Drehwinkels können insbesondere dann auf einfache Weise verwirklicht werden, wenn der erste Anschlagvorsprung eine geringere axiale Länge hat als der zweite Anschlagvorsprung.

Der zweite Anschlagvorsprung beginnt zweckmäßigerweise unmittelbar auf der Rückseite des Zapfenkopfes, so daß hohe Funktionssicherheit gewährleistet ist.

Nach einer weiteren Ausgestaltung der Erfindung ist vorgesehen, daß die Anschlagvorsprünge in gleichem axialen Abstand von dem Zapfenkopf enden. Auf diese Weise kann bspw. erreicht werden, daß in der Öffnungsruhestellung des Verschlußzapfens die beiden Anschlagvorsprünge vollständig in das Formloch des ersten Bauteils eintauchen.

Der Verschlußzapfen kann bei einer weiteren Ausgestaltung der Erfindung unverlierbar an dem ersten Bauteil gehalten sein. Auf diese Weise ist es möglich, das erste Bauteil bereits mit vormontiertem Verschlußzapfen an die Stelle, wo die Montage an das zweite Bauteil erfolgen soll, anzuliefern. Dadurch wir die Montagezeit an Ort und Stelle weiter verkürzt.

Die Unverlierbarkeit kann insbesondere im Rahmen der Erfindung dadurch erreicht werden, daß das Formloch des ersten Bauteils radiale Schlitzerweiterungen für das Hindurchdrücken der Verriegelungsvorsprünge des Verschlußzapfens aufweist. Die Schlitzerweiterungen sind dabei relativ zu dem Querschnitt der Verriegelungsvorsprünge so bemessen, daß eine beachtliche Preßkraft erforderlich ist, um den Verschlußzapfen mit den Verriegelungsvorsprüngen durch das Formloch des ersten Bauteils hindurchzudrücken, so daß ein ungewolltes Herausfallen des Verschlußzapfens aus dem Formloch verhindert ist.

Die Sicherung des Verschlußzapfens an dem ersten Bauteil kann dabei gemäß einem weiteren Erfindungsmerkmal dadurch weiter verbessert werden, daß die Schlitzerweiterungen des Formlochs des ersten Bauteils sich von der Außenseite zur Innenseite des ersten Bauteils konisch verjüngen. Auf diese Weise ist zwar das Hindurchdrücken des Verschlußzapfens mit seinen Verriegelungsvorsprüngen durch das Formloch des ersten Bauteils gerade noch möglich, ein Zurückziehen aus dem Formloch jedoch verhindert.

Im Interesse einer einfachen Ausgestaltung des Drehverschlusses kann in Weiterbildung des Erfindungsgedankens die eine Schlitzerweiterung den Sperrschlitz für den ersten Anschlagvorsprung in Öffnungsruhestellung des Verschlußzapfens und die andere Schlitzerweiterung in Fortsetzung der Randaussparung des Formlochs des ersten Bauteils eine Anschlagfläche für den zweiten Anschlagvorsprung in Öffnungsruhestellung des Verschußzapfens bilden.

Die Betätigung des Verschlußzapfens, d.h. dessen Überführung aus der Öffnungsruhestellung in die Verriegelungsstellung und umgekehrt wird dadurch vereinfacht, wenn die Anschlagvorsprünge an ihren freien Enden abgerundet sind.

Dem gleichen Ziel dient die Maßnahme, wonach die Verriegelungsvorsprünge an ihrer rückwärtigen Verriegelungskante eine Auflaufschräge aufweisen können.

Um das Einführen der Verriegelungsvorsprünge in die Formlöcher der beiden Bauteile zu erleichtern, können diese ebenfalls auf ihre dem Zapfenschaftende zugewandten Seite abgerundet sein.

Dem gleichen Zweck dient es, wenn der Verschlußzapfen an seinem freien Ende selbst konisch verjüngt ist.

Die Betätigung des Verschlußzapfens mittels eines Werkzeugs oder eines sonstigen Hilfsmittels, wie einer Münze, kann dadurch erreicht werden, daß der Zapfenkopf mit Angriffsflächen für das Eindrücken des Verschlußzapfens gegen die Rückstellkraft des Federelements und das Verdrehen des Verschlußzapfens mittels des Werkzeugs oder sonstigen Hilfsmittels aufweist.

Diese Angriffsflächen können bspw. von einer Schlitzaussparung des Zapfenkopfes gebildet sein, in welche man mittels der Schneide eines Schraubendrehers oder mittels einer Münze eingreifen kann.

Von Vorteil ist es, wenn die Verschlußstellung des Verschlußzapfens von außen erkennbar ist. Dies kann auf einfache Weise dadurch verwirklicht sein, daß die Schlitzaussparung zu den Verriegelungsvorsprüngen ausgerichtet ist bzw. senkrecht zu diesen steht.

Um zu erreichen, daß der Drehverschluß möglichst wenig oder gar nicht über die Außenseite des ersten Bauteils vorspringt, insbesondere nicht in Verriegelungsstellung des Verschlußzapfens, weist das erste Bauteil vorzugsweise eine Vertiefung für die Aufnahme des Zapfenkopfes in Verriegelungsstellung des Verschlußzapfens auf.

Diese Vertiefung kann dann auch der Aufnahme des bspw. als Schraubenfeder ausgebildeten Federelements dienen.

Mit der Erfindung wird ferner vorgeschlagen, den Verschlußzapfen einteilig aus Kunststoff zu fertigen.

Der erfindungsgemäße Drehverschluß kommt im Gegensatz zum eingangs erörterten Stand der Technik ohne zusätzliches Aufnahmeelement für den Verschußbolzen und ohne zusätzlicher Halterung an dem ersten Bauteil aus. Eine Verliersicherung für den Verschlußzapfen kann auf einfache Weise vorgesehen sein. Die Federbelastung des Verschlußzapfens wirkt gegen Klappern der Bauteile gegeneinander und dient dem Toleranzausgleich. Der Drehverschluß gewährleistet ferner eine Arretierung in offener und geschlossener Position des Verschlußzapfens, wodurch eine hohe Vibrationssicherheit erzielt wird. Der Betätigungsvorgang: Drücken und um 90° Drehen, und zwar sowohl beim Verriegeln als auch beim Entriegeln, ist aufgrund der vorgesehen Anschlagflächen für den zweiten Anschlagvorsprung narrensicher.

Von Vorteil weist der Zapfenschaft des Verschlußzapfens eine langlochartige, im wesentlichen senkrecht zur Mittelachse des Zapfenschafts angeordnete Durchbrechung auf, in welcher das als separates Bauteil ausgebildete Verriegelungsteil formschlüssig eingesetzt worden ist. Aufgrund dieser Maßnahme läßt sich als Federelement eine Kegelfeder montieren, die auch einen Einsatz des Drehverschlußes bei sehr kleinem Einbauraum zuläßt.
Die Formschlußverbindung zwischen dem Verriegelungsteil und dem Verschlußzapfen wird auf besonders vorteilhafte Weise dadurch hergestellt, daß das Verriegelungsteil einen Mittelabschnitt mit gegenüber der Dicke der Verriegelungsvorsprünge stufenartig verringerter Dicke aufweist, wobei die lichte Weite der Durchbrechung im wesentlichen der Dicke des Mittelabschnitts entspricht.

Von Vorteil weisen die Verriegelungsvorsprünge nach einer weiteren Ausführungsform der Erfindung am äußeren Ende eine der lichten Weite der Durchbrechung im wesentlichen entsprechenden Dicke auf, die in Richtung des Mittelabschnitts gesehen stetig bis auf eine maximale Dicke anwächst. Durch diese Maßnahme gestaltet sich die Festlegung des Verriegelungsteils in der langlochartigen Durchbrechung besonders einfach.

Eine sichere Festlegung des Verriegelungsteils in der Durchbrechung ist dadurch gewährleistet, daß die Höhe der Durchbrechung an die Höhe des Mittelabschnitts angepaßt ist und gegebenenfalls geringfügig kleinere Werte aufweist.

Nach einer Ausführungsform der Erfindung ist die Höhe des Mittelabschnitts größer als die Höhe der Verriegelungselemente bemessen, wodurch die Gefahr der Beschädigung der Verriegelungskante beim Einsetzen des Verrieglungsteils in die Durchbrechung weitestgehend vermieden ist.

Von Vorteil ist das Federelement als Kegelfeder ausgebildet und in der Vertiefung des ersten Bauteils angeordnet, wodurch die äußeren Abmessungen des Drehverschlusses sehr gering gehalten werden können.

Nach eine anderen Ausführungsform der Erfindung ist die Oberseite des Zapfenkopfes bezüglich der ebenen Unterseite des Zapfenkopfes geneigt oder gewölbt ausgebildet. Aufgrund dieser Maßnahme ist die Möglichkeit gegeben, daß die Form des Zapfenkopfes auch an solche Oberflächenkonturen des ersten Bauteils angepaßt werden können, die nicht waagerecht angeordnet oder eben ausgebildet sind.

Von Vorteil ist die Oberseite des Zapfenkopfes bezüglich der Unterseite des Zapfenkopfes winkelig geneigt und der Neigungswinkel bezüglich der Verrieglungsvorsprünge derart orientiert, daß in der Verriegelungsstellung die Form des Zapfenkopfes der Kontur des ersten Bauteils angepaßt ist. Da die Verriegelungsstellung des Verschlußzapfens durch die relative Lage der Verriegelungs- bzw. Anschlagsvorsprünge genau definiert ist, wird durch diese Maßnahme gewährleistet, daß der Zapfenkopf in der Verriegelungsstellung an die Kontur des nicht waagerecht ausgebildeten ersten Bauteils angepaßt ist. Eine Verletzungsgefahr durch aus der Vertiefung des ersten Bauteils herausragende Teile des Zapfenkopfes in der Verriegelungsstellung ist somit weitesgehend vermieden.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschrieben und/oder bildlich dargestellten Merkmale für sich oder in beliebiger sinnvoller Kombination den Gegenstand der Erfindung auch unabhängig von ihrer Zusammenfassung in einzelnen Ansprüchen oder deren Rückbeziehung.

Es zeigen:
- Fig. 1a: einen die Erfindung aufweisenden Drehverschluß in Seitenansicht bei geschnittenem ersten Bauteil in Öffnungsruhestellung des Verschlußzapfens vor dem Ansetzen an das zweite Bauteil,
- Fig. 1b: eine Darstellung entsprechend Fig. 1a, bei welcher sich jedoch der Verschlußzapfen jetzt bei angesetztem zweiten Bauteil in Verriegelungsstellung befindet und das zweite Bauteil ebenfalls geschnitten dargestellt ist,
- Fig. 2a: einen Schnitt entsprechend der Schnittlinie IIa - IIa von Fig. 1a,
- Fig. 2b: einen Schnitt entsprechend der Schnittlinie IIb - IIb von Fig. 1b,
- Fig. 3a-c: den Verschlußzapfen in Seitenansicht aus verschiedenen senkrecht zueinander stehenden Richtungen,
- Fig. 4: ausschnittsweise das erste Bauteil im Bereich seines Formlochs in Draufsicht,
- Fig. 5: einen Schnitt entsprechend der Schnittlinie V - V von Fig. 4, und
- Fig. 6: eine Draufsicht auf das zweite Bauteil im Bereich seines Formlochs,
- Fig. 7a: eine Seitenansicht des Verschlußzapfens mit einer Durchbrechung zur Aufnahme des Verriegelungsteils,
- Fig. 7b: einen vergrößerten Ausschnitt X der Fig. 7a,
- Fig. 8a: eine Seitenansicht des Verriegelungsteils,
- Fig. 8b: eine Ansicht der Kopfseite des Verriegelungsteils der Fig. 8a,
- Fig. 8c: eine Draufsicht auf das Verriegelungsteil der Fig. 8a,
- Fig. 9: eine Ansicht des ersten Bauteils mit der Vertiefung, wobei die Kontur des Bauteils bezüglich des Bodens der Vertiefung nicht waagerecht verläuft,
- Fig. 10a: eine Seitenansicht des Verschlußzapfens mit einem an die Kontur des ersten Bauteils der Fig. 9 angepaßten Zapfenkopf, und
- Fig. 10b: eine weitere, um 90° gedrehte Seitenansicht des Verschlußzapfens der Fig. 10a.

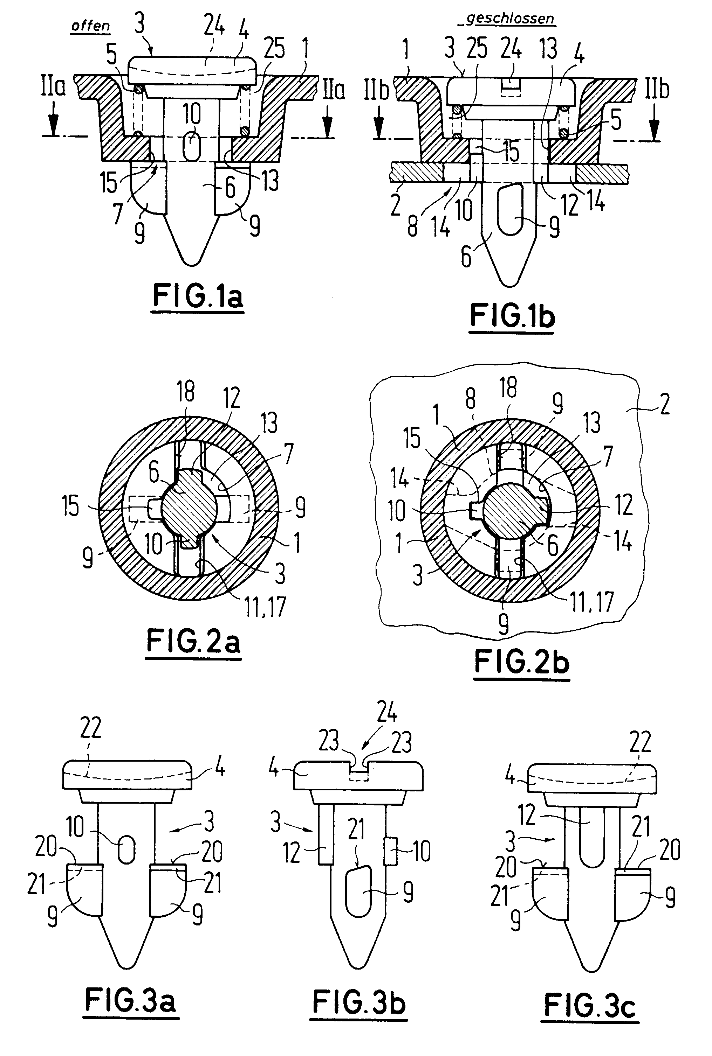

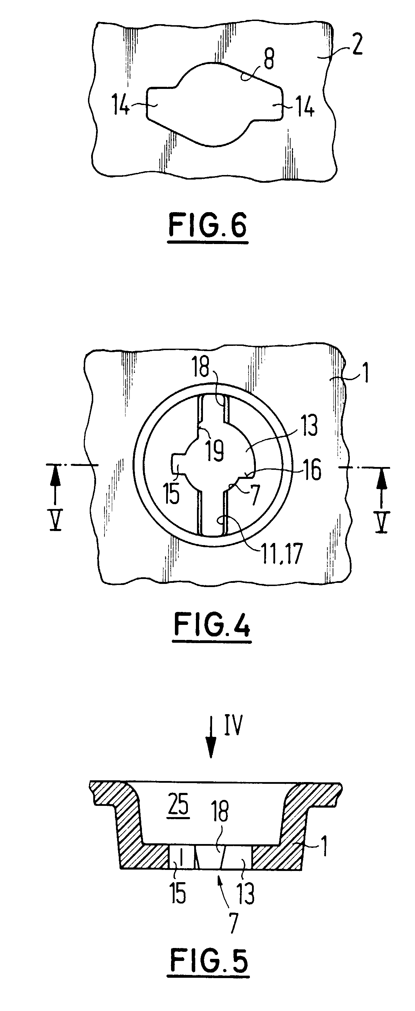

Der in den Zeichnungen dargestellte Drehverschluß dient dem lösbaren Verbinden der beiden jedenfalls beispielsweise im wesentlichen plattenförmigen Bauteile 1 und 2 mittels eines Verschlußzapfens 3. Gemäß den Fig. 1a, 1b und 5 hat das erste Bauteil 1 ein Formloch 7 im Boden einer Vertiefung 25, dessen Formgebung am besten in Fig. 4 zu erkennen ist. Der Verschlußzapfen 3 stützt sich nach Vormontage an dem ersten Bauteil 1 in einer Öffnungsruhestellung mittels eines Zapfenkopfes 4 über ein als Schraubenfeder ausgebildetes Federelement 5 auf der Außenseite des ersten Bauteils 1, im dargestellten Fall auf dem Boden der Vertiefung 25 ab. Das Federelement 5 ist dabei vollständig in der Vertiefung 25 aufgenommen und in der in Fig. 1a dargestellten Öffnungsruhestellung des Verschlußzapfens 3 ragt dieser mit dem Zapfenkopf 4 über die Außenseite des ersten Bauteils 1 hinaus.

Das zweite Bauteil 2 weist, wie insbesondere aus den Fig. 1b und 6 ersichtlich, ebenfalls ein Formloch 8 auf, dessen Gestalt insbesondere aus Fig. 6 erkennbar ist und welches zur Montage und insbesonder in der in Fig. 1b dargestellten Verriegelungsstellung des Verschlußzapfens 3 mit dem Formloch 7 in dem ersten Bauteil 1 fluchtet. Wie aus Fig. 1b erkennbar ragt dabei der Zapfenschaft 6 durch die zueinander fluchtenden Formlöcher 7 und 8 der Bauteile 1 und 2 hindurch.

Der Verschlußzapfen 3 weist selbst unmittelbar oberhalb seines freien, konisch zulaufenden Endes an seinem Umfang diametral einander gegenüberliegende Verriegelungsvorsprünge 9 auf, welche sich in der in Fig. 1a dargestellten Öffnungsruhestellung unter der Rückstellkraft des Federelements 5 an der Innenseite des ersten Bauteils 1 mit ihren Verriegelungskanten 20 abstüzten. Auf der dem freien Ende des Zapfenschafts 6 zugewandten Seite sind die Verriegelungsvorsprünge 9 zur Erleichterung des Einführens in die Formlöcher 7 und 8 viertelkreisartig abgerundet.

Beim Ansetzen des ersten Bauteils 1 gegen das zweite Bauteil 2 bei Öffnungsruhestellung des bereits vormontierten Verschlußzapfens 3 werden die Verriegelungsvorsprünge 9 in das Formloch 8 des zweiten Bauteils 2 eingeführt. Wie insbesondere aus Fig. 6 erkennbar, hat das Formloch 8 des zweiten Bauteils 2 radiale Randaussparungen 14 für den Durchtritt der Verriegelungsvorsprünge 9.

Drückt man dann den Verschlußstopfen 3 gegen die Rückstellkraft des Federelements 5 weiter hinein, so werden die Verriegelungsvorsprünge 9 axial durch das Formloch 8 des zweiten Bauteils 2 hindurchgeführt, und zwar so weit, bis jedenfalls die Verriegelungsvorsprünge 9 ein Verdrehen des Verschlußzapfens 3 um einen Winkel von z.B. 90° in eine Verriegelungsstellung der Veriegelungsvorsprünge 9 hinter dem anderen Bauteil 2 gestatten. Läßt man dann den Verschlußzapfen 3 wieder los, so werden die Verriegelungsvorsprünge 9 mit ihrer Verriegelungskante 20 gegen die Rückseite des zweiten Bauteils 2 gepreßt, so daß die beiden Bauteile 1, 2 zusammengehalten werden. Das Verdrehen des Verschlußzapfens 2 in die Verriegelungsstellung wird dadurch erleichtert, daß die Verriegelungsvorsprünge 9 an ihrem dem zweiten Bauteil 2 zugewandten Ende in Nachbarschaft der Verriegelungskante 20 eine Auflaufschräge 21 aufweisen.

In dem Zapfenkopf 4 ist eine Schlitzaussparung 24 mit horizontalen und vertikalen Angriffsflächen 22, 23 für den Eingriff eines Werkzeugs oder einer Münze vorgesehen, mit Hilfe welcher der Verschlußzapfen 3 sowohl gegen die Rückstellkraft des Federelements 5 niedergedrückt als auch aus der Öffnungsruhestellung in die Verriegelungsstellung und wieder zurück gedreht werden kann.

An dem Zapfenschaft 6 sind, wie am besten aus den Fig. 3a bis 3c ersichtlich, in dem Bereich zwischen den Verreigelungsvorsprüngen 9 und dem Zapfenkopf 4 diametral einander gegenüberliegend und jeweils um 90° zu den Verriegelungsvorsprüngen 9 versetzt zwei weitere Vorsprünge vorgesehen, nämlich ein erster kürzerer Anschlagvorsprung 10 und zweiter längerer Anschlagvorsprung 12. Der erste Anschlagvorsprung 10 beginnt im Abstand von dem Zapfenkopf 6 und endet etwa auf der Höhe der Verriegelungskante 20 der Verriegelungsvorsprünge 9. Der zweite Anschlagvorsprung 12 beginnt unmittelbar an der Rückseite des Zapfenkopfes 4 und endet in dem dargestellten Fall auf gleicher Höhe wie der erste Anschlagvorsprung 10. Beide Anschlagvorsprünge 10, 12 sind an ihren freien Enden abgerundet.

Der erste Anschlagvorsprung 10 ist so angeordnet und bemessen, daß er bei einem vollständigen Eindrücken des Verschlußzapfens 3 gegen die Rückstellkraft des Federelements aus einer Öffnungsruhestellung aus einem Sperrschlitz 11 des Formlochs 7 des ersten Bauteils 1 aushebbar ist. Nach einem Verdrehen des Verschlußzapfens in die in Fig. 1b dargestellte Verriegelungsstellung kann der erste Anschlagvorsprung 10 bei dem Zurückfedern des Verschlußzapfens 6 bis zur Anlage der Verriegelungskanten 20 an die Rückseite des zweiten Bauteils 2 in einen Arretierungsschlitz 15 des Formlochs 7 des ersten Bauteils 1 einrasten. Der zweite Arretierungsvorsprung 12 verbleibt aufgrund seiner größeren Länge auch beim Eindrücken des Verschlußzapfens 3 gegen die Rückstellkraft des Federelements 5 aus der Öffnungsruhestellung und auch bei einem Verdrehen des Verschlußzapfens 3 in die Verriegelungsstellung in einer Formaussparung 13 des Formlochs 7 des ersten Bauteils 1. Diese Formaussparung 13 weist allerdings eine Anschlagfläche 16 für den zweiten Arretierungsvorsprung 12 auf, welche sicherstellt, daß der Verschlußzapfen 3 nur in einer Richtung aus der Öffnungsruhestellung in die Verriegelungsstellung verdreht werden kann.

Das Formloch 8 des zweiten Bauteils 2 hat abgesehen von den Randaussparungen 14 einen geringeren Durchmesser, welcher jedoch das Verdrehen des Verriegelungszapfens 3 bei seinem vollständigen Eindrücken gegen das Federelement 5 trotz der hierbei in das Formloch 8 hineinragenden Anschlagvorsprünge 10, 12 gestattet.

Der erste Anschlagvorsprung 10 befindet sich in der Öffnungsruhestellung in einem Sperrschlitz 11 des ersten Bauteils 1 (vgl. Fig. 2a), wird beim Drücken auf den Verschlußzapfen 3 gegen die Rückstellkraft des Federelements 5 aus dem Sperrschlitz 11 ausgehoben und rastet nach einem Verdrehen des Verschlußzapfens 3 in die Verriegelungsstellung unter der Wirkung des Federelements 5 in den Arretierungsschlitz 15 ein, während sich die Verriegelungskanten 20 der Verriegelungsvorsprünge 9 auf die Rückseite des zweiten Bauteils 2 zur Verriegelung anlegen. Bei all diesen Bewegungen verbleibt der zweite Anschlagvorsprung 12 wenigstens bereichsweise in der Randaussparung 13 des Formlochs 7 des ersten Bauteils 1.

Wie aus Fig. 4 erkennbar, weist das Formloch 7 des ersten Bauteils 1 jeweils um 90° versetzt zu dem Arretierungsschlitz 15 diametral einander gegenüberliegende Schlitzerweiterung 17 und 18 auf, wobei die Schlitzerweiterung 17 den Sperrschlitz 11 für den ersten Anschlagvorsprung 10 in Öffnungsruhestellung bildet. Die andere Schlitzerweiterung 18 bildet in Fortsetzung zu der Formaussparung 13 für den zweiten Anschlagvorsprung 12 eine Anschlagfläche 19, welche den Drehwinkel von der Öffnungsruhestellung des Verschlußzapfens 3 in dessen Verriegelungsstellung auf 90° begrenzt.

Die Schlitzerweiterungen 17, 18 verjüngen sich, wie insbesondere aus Fig. 5 ersichtlich, von der Außenseite zur Innenseite des ersten Bauteils 1 konisch derart, daß der Verschlußzapfen 3 mit den Verriegelungsvorsprüngen 9 zwar durch die Schlitzerweiterungen 17, 18 hindurchgepreßt werden kann, jedoch nicht mehr in umgekehrter Richtung. Auf diese Weise wird der Verschlußzapfen 3 unverlierbar an dem ersten Bauteil 1 vormontiert.

Wie insbesondere aus den Fig. 3a bis 3c erkennbar, ist die Schlitzaussparung 24 des Zapfenkopfes 4 des einteilig aus Kunststoff bestehenden Verschlußzapfens 3 zu den Verriegelungsvorsprüngen 9 ausgerichtet. Auf diese Weise ist von außen die jeweilige Drehstellung und damit insbesondere auch die Öffnungsruhestellung bzw. die Verriegelungsstellung des Verschlußzapfens 6 erkennbar.

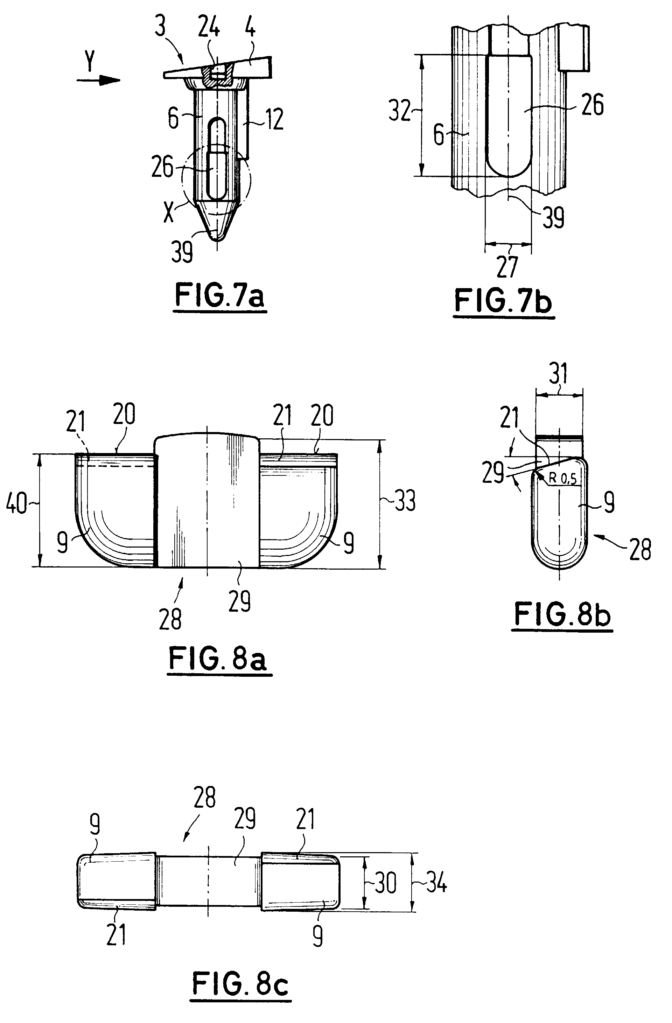

In den Fig. 7a bis 8c ist ein Verschlußzapfen 3 dargestellt, dessen Zapfenschaft 6 eine langlochartige, im wesentlichen senkrecht zur Mittelachse 39 des Zapfenschafts 6 angeordnete Durchbrechung 26 aufweist. In diese Durchbrechung 26 ist das als separates Bauteil ausgebildete Verriegelungsteil 28 formschlüssig einsetzbar. Das Verriegelungsteil 28 ist mit einem Mittelabschnitt 29 mit gegenüber der maximalen Dicke 34 der Verriegelungsvorsprünge 9 stufenartig verringerter Dicke 31 ausgestattet, wobei die Dicke 31 des Mittelabschnitts 29 im wesentlichen der lichten Weite 27 der Durchbrechung 26 entspricht.

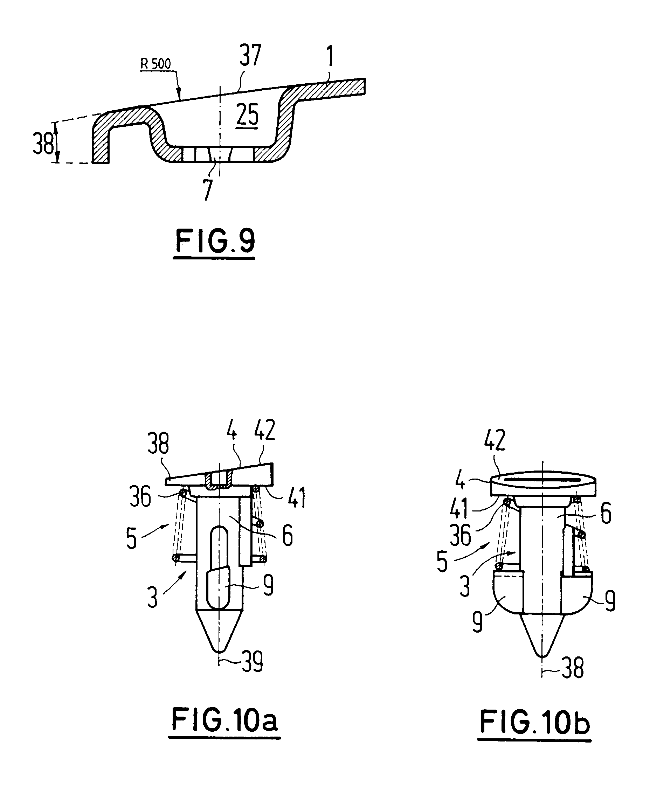

Die Verrieglungsvorsprünge 9 besitzen am äußeren Ende eine der lichten Weite 27 der Durchbrechung 26 im wesentlichen entsprechende Dicke, die in Richtung des Mittelabschnitts gesehen stetig bis auf die maximale Dicke 34 anwächst. Die Höhe 32 der Durchbrechung 26 ist an die Höhe der Mittelabschnitts angepaßt und weist gegebenenfalls geringfügig kleinere Werte auf. Dabei ist die Höhe 33 des Mittelabschnitts größer bemessen als die Höhe 40 der Verriegelungselemente. Als Federelement 5 ist eine Kegelfeder 36 vorgesehen (Fig. 10), die in der Vertiefung 25 des ersten Bauteils angeordnet ist.

Die Oberseite 42 des Zapfenkopfes 4 ist bezüglich der ebenen Unterseite 41 des Zapfenkopfes 4 geneigt ausgebildet. Der Neigungswinkel entspricht der Kontur 37 des ersten Bauteils 1 bezogen auf den ebenen Boden der Vertiefung 25. Dabei ist der Neigungswinkel 38 zwischen der Oberseite 42 und der Unterseite 41 des Zapfenkopfes 4 bezüglich der Verriegelungsvorsprünge 9 derart orientiert, daß in der Verriegelungsstellung die Form des Zapfenkopfes 4 der Kontur 37 des ersten Bauteils 1 angepaßt ist.

### Bezugszeichenliste:

- 1: erstes Bauteil
- 2: zweites Bauteil
- 3: Verschlußzapfen
- 4: Zapfenkopf
- 5: Federelement
- 6: Zapfenschaft
- 7: Formloch
- 8: Formloch
- 9: Verriegelungsvorsprünge
- 10: erster Anschlagvorsprung
- 11: Sperrschlitz
- 12: zweiter Anschlagvorsprung
- 13: Formaussparung
- 14: Randaussparung
- 15: Arretierungsschlitz
- 16: Anschlagfläche
- 17: Schlitzerweiterung
- 18: Schlitzerweiterung
- 19: Anschlagfläche
- 20: Verriegelungskante
- 21: Auflaufschräge
- 22: Angriffsfläche
- 23: Angriffsfläche
- 24: Schlitzaussparung
- 25: Vertiefung
- 26: Durchbrechung
- 27: lichte Weite
- 28: Verriegelungsteil
- 29: Mittelabschnitt
- 30: Dicke
- 31: Dicke
- 32: Höhe
- 33: Höhe
- 34: Dicke
- 36: Kegelfeder
- 37: Kontur
- 38: Neigungswinkel
- 39: Mittelachse
- 40: Höhe
- 41: Unterseite
- 42: Oberseite

## Patentansprüche

1. Drehverschluß, insbesondere Vierteldrehverschluß, für das lösbare Verbinden von z.B. plattenförmigen Bauteilen (1, 2), wie eines Deckels an einem Gehäuse, mit einem Verschlußzapfen (3), welcher sich z.B. mittels dessen Zapfenkopfs (4) über ein Federelement (5) auf dem ersten Bauteil (1) abstützt, dessen Zapfenschaft (6) durch zueinander fluchtende Formlöcher (7, 8) der Bauteile (1, 2) ragt und an seinem freien Ende, vorzugsweise diametral einander gegenüberliegende Verriegelungsvorsprünge (9) trägt, welche beim Ansetzen des ersten Bauteils (1) gegen das zweite Bauteil (2) in das Formloch (8) des zweiten Bauteils (2) einführbar, gegen die Rückstellkraft des Federelements (5) axial durch das Formloch (8) des anderen Bauteils (2) hindurchführbar und durch anschließendes Drehen des Verschlußzapfens (3) um einen Winkel von z.B. 90° in eine Verriegelungsstellung hinter dem anderen Bauteil (2) überführbar sind, **dadurch gekennzeichnet,** daß der Zapfenschaft (6) im Abstand von dem Zapfenkopf (4) einen ersten Anschlagvorsprung (10) trägt, welcher bei einem vollständigen Eindrücken des Verschlußzapfens (3) gegen die Rückstellkraft des Federelements (5) aus einer Öffnungsruhestellung aus einem Sperrschlitz (11) des Formlochs (7) des ersten Bauteils (1) aushebbar ist, daß der Zapfenschaft (6) einen zweiten, in geringerem Abstand von dem Zapfenkopf (4) beginnenden Anschlagvorsprung (12) trägt, welcher beim Eindrücken des Verschlußzapfens (3) gegen die Rückstellkraft des Federelements (5) aus der Öffnungsruhestellung in einer Formaussparung (13) des Formlochs (7) des ersten Bauteils (1) verbleibt, welche das anschließende Drehen des Verschlußzapfens (3) nur in einer Richtung um einen vorgegebenen Winkel von z.B. 90° in eine Verriegelungsstellung gestattet, daß das Formloch (8) des zweiten Bauteils (2) radiale Randaussparungen (14) für den Durchtritt der Verriegelungsvorsprünge (9) und im übrigen einen geringeren Durchmesser aufweist, welcher jedoch das Verdrehen des Verschlußzapfens (3) bei seinem vollständigen Eindrücken gegen die Rückstellkraft des Federelements (5) trotz der Anschlagvorsprünge (10, 12) gestattet, und daß sich in der unter der Rückstellkraft des Federelements (5) gesicherten Verriegelungsstellung des Verschlußzapfens (3) der erste Anschlagvorsprung (10) wenigstens teilweise in einem ihm zugeordneten Arretierungsschlitz (15) des Formlochs (7) des ersten Bauteils (1) befindet.

2. Drehverschluß nach Anspruch 1, **dadurch gekennzeichnet,** daß die Formaussparung (13) des Formlochs (7) des ersten Bauteils (1) eine Anschlagfläche (16) für den zweiten Anschlagvorsprung (12) zur Begrenzung der Drehbewegung des Verschlußzapfens (3) in Verriegelungsstellung bildet.

3. Drehverschluß nach Anspruch 1 oder 2, **dadurch gekennzeichnet,** daß die Anschlagvorsprünge (10, 12) diametral einander gegenüberliegend am Umfang des Zapfenschafts (6) vorgesehen sind.

4. Drehverschluß nach einem oder mehreren der vorhergehenden Ansprüche, **dadurch gekennzeichnet,** daß der erste Anschlagvorsprung (10) eine geringere axiale Länge hat als der zweite Anschlagvorsprung (12).

5. Drehverschluß nach einem oder mehreren der vorhergehenden Ansprüche, **dadurch gekennzeichnet**, daß der zweite Anschlagvorsprung (12) unmittelbar auf der Rückseite des Zapfenkopfes (4) beginnt.

6. Drehverschluß nach einem oder mehreren der vorhergehenden Ansprüche, **dadurch gekennzeichnet,** daß die Anschlagvorsprünge (10, 12) in gleichem axialem Abstand von dem Zapfenkopf (4) enden.

7. Drehverschluß nach einem oder mehreren der vorhergehenden Ansprüche, **dadurch gekennzeichnet,** daß der Verschlußzapfen (3) unverlierbar an dem ersten Bauteil (1) gehalten ist.

8. Drehverschluß nach Anspruch 7, **dadurch gekennzeichnet,** daß das Formloch (7) des ersten Bauteils (1) radiale Schlitzerweiterungen (17, 18) für das Hindurchdrücken der Verriegelungsvorsprünge (9) des Verschlußzapfens (3) aufweist.

9. Drehverschluß nach Anspruch 8, **dadurch gekennzeichnet,** daß die Schlitzerweiterungen (17, 18) sich von der Außenseite zur Innenseite des ersten Bauteils (1) konisch verjüngen.

10. Drehverschluß nach Anspruch 8 oder 9, **dadurch gekennzeichnet,** daß die eine Schlitzerweiterung (17) den Sperrschlitz (11) für den ersten Anschlagvorsprung (10) in Öffnungsruhestellung des Verschlußzapfens (3) und die andere Schlitzerweiterung (18) in Fortsetzung der Formaussparung (13) des Formlochs (7) eine Anschlagfläche (19) für den zweiten Anschlagvorsprung (12) in Öffnungsruhestellung des Verschlußzapfens (3) bildet.

11. Drehverschluß nach einem oder mehreren der vorhergehenden Ansprüche, **dadurch gekennzeichnet,** daß die Anschlagvorsprünge (10, 12) an ihren freien Enden abgerundet sind.

12. Drehverschluß nach einen oder mehreren der vorhergehenden Ansprüche, **dadurch gekennzeichnet,** daß die Verriegelungsvorsprünge (9) an ihrer rückwärtigen Verriegelungskante (20) eine Auflaufschräge (21) aufweisen.

13. Drehverschluß nach einem oder mehreren der vorhergehenden Ansprüche, **dadurch gekennzeichnet,** daß die Verriegelungsvorsprünge (9) auf ihrer dem Zapfenschaftende zugewandten Seite abgerundet sind.

14. Drehverschluß nach einem oder mehreren der vorhergehenden Ansprüche, **dadurch gekennzeichnet**, daß der Verschlußzapfen (3) an seinem freien Ende konisch verjüngt ist.

15. Drehverschluß nach einem oder mehreren der vorhergehenden Ansprüche, **dadurch gekennzeichnet,** daß der Zapfenkopf (4) Angriffsflächen (22, 23) für das Eindrücken des Verschlußzapfens (3) gegen die Rückstellkraft des Federelements (5) und das Verdrehen des Verschlußzapfens (3) mittels eines Werkzeuges aufweist.

16. Drehverschluß nach Anspruch 15, **dadurch gekennzeichnet,** daß die Angriffsflächen (22, 23) von einer Schlitzaussparung (24) des Zapfenkopfes (4) gebildet sind.

17. Drehverschluß nach Anspruch 16**, dadurch gekennzeichnet,** daß die Schlitzaussparung (24) zu den Verriegelungsvorsprüngen (9) ausgerichtet ist bzw. senkrecht zu diesen steht.

18. Drehverschluß nach einem oder mehreren der vorhergehenden Ansprüche, **dadurch gekennzeichnet,** daß das erste Bauteil (1) eine Vertiefung (25) für die Aufnahme des Zapfenkopfes (4) jedenfalls in Verriegelungsstellung des Verschlußzapfens (3) aufweist.

19. Drehverschluß nach Anspruch 18, **dadurch gekennzeichnet,** daß das Federelement (5) als Schraubenfeder ausgebildet und in der Vertiefung (25) des ersten Bauteils (1) angeordnet ist.

20. Drehverschluß nach einem oder mehreren der vorhergehenden Ansprüche, **dadurch gekennzeichnet,** daß der Verschlußzapfen (3) einteilig aus Kunststoff gefertigt ist.

21. Drehverschluß nach einem der Ansprüche 1 bis 18, **dadurch gekennzeichnet,** daß der Zapfenschaft (6) des Verschlußzapfens (3) eine langlochartige, im wesentlichen senkrecht zur Mittelachse (39) angeordnete Durchbrechung (26) aufweist, in welcher das als separates Bauteil ausgebildete Verriegelungsteil (28) formschlüssig eingesetzt ist.

22. Drehverschluß nach Anspruch 21, **dadurch gekennzeichnet,** daß das Verriegelungsteil (28) einen Mittelabschnitt (29) mit gegenüber der Dicke (34) der Verriegelungsvorsprüngen (9) stufenartig verringerter Dicke (31) aufweist, wobei die lichte Weite (27) der Durchbrechung (26) im wesentlichen der Dicke (31) des Mittelabschnitts (29) entspricht.

23. Drehverschluß nach Anspruch 22, **dadurch gekennzeichnet,** daß die Verriegelungsvorsprünge (9) am äußeren Ende eine der lichten Weite (27) der Durchbrechung (26) im wesentlichen entsprechende Dicke (30) aufweist, die in Richtung des Mittelabschnitts gesehen stetig bis auf die Dicke (34) anwächst.

24. Drehverschluß nach Anspruch 22 oder 23, **dadurch gekennzeichnet,** daß die Höhe (32) der Durchbrechung (26) an die Höhe (33) des Mittelabschnitts (29) angepaßt ist und gegebenenfalls geringfügig kleinere Werte aufweist.

25. Drehverschluß nach einem der Ansprüche 22 bis 24, **dadurch gekennzeichnet,** daß die Höhe (33) des Mittelabschnitts (29) größer als die Höhe (40) der Verriegelungselemente (9) bemessen ist.

26. Drehverschluß nach einem der Ansprüche 21 bis 25, **dadurch gekennzeichnet**, daß das Federelement (5) als Kegelfeder (36) ausgebildet und in der Vertiefung (25) des ersten Bauteils (1) angeordnet ist.

27. Drehverschluß nach einem der vorhergehenden Ansprüche, **dadurch gekennzeichnet,** daß die Oberseite (42) des Zapfenkopfes (4) bzgl. der ebenen Unterseite (41) des Zapfenkopfes (4) geneigt oder gewölbt ausgebildet ist.

28. Drehverschluß nach Anspruch 27, **dadurch gekennzeichnet,** daß die Oberseite (42) des Zapfenkopfes (4) bzgl. der Unterseite (41) des Zapfenkopfes (4) winklig geneigt und der Neigungswinkel (38) bzgl. der Verriegelungsvorsprünge (9) derart orientiert ist, daß in der Verriegelungsstellung die Form des Zapfenkopfes (4) der Kontur (37) des ersten Bauteils (1) angepaßt ist.

## Claims

1. Rotational fastener, in particular a quarterturn fastener, for the releasable connection of, for example, plate-shaped components (1, 2), like a cover on a housing, having a fastener pin (3) which is supported, for example by means of its pin head (4), by way of a spring element (5) on the first component (1), the pin shaft (6) of which fastener pin projects through shaped holes (7, 8) of the components (1, 2), which shaped holes are aligned with each other, and which pin shaft at its free end supports interlocking projections (9) which are preferably diametrically opposed to each other and which can be introduced into the shaped hole (8) of the second component (2) when the first component (1) is placed against the second component (2), can be guided axially through the shaped hole (8) of the other component (2) against the restoring force of the spring element (5) and, by means of subsequent turning of the fastener pin (3), can be transferred by an angle of, for example, 90° into an interlocking position behind the other component (2), characterized in that the pin shaft (6) at a distance from the pin head (4) supports a first stop projection (10) which, when the fastener pin (3) is pushed completely against the restoring force of the spring element (5), can be lifted out of an opening position of rest out of a blocking slot (11) of the shaped hole (7) of the first component (1), in that the pin shaft (6) supports a second stop projection (12) beginning at a smaller distance from the pin head (4), which stop projection (12), when the fastener pin (3) is pushed against the restoring force of the spring element (5) out of the opening position of rest, remains in a shaped recess (13) of the shaped hole (7) of the first component (1), which shaped recess allows the subsequent turning of the fastener pin (3) only in one direction by a specified angle of, for example, 90° into an interlocking position, in that the shaped hole (8) of the second component (2) has radial edge recesses (14) for the passage of the interlocking projections (9) and, moreover, has a smaller diameter which, however, allows the turning of the fastener pin (3) when it is pushed completely against the restoring force of the spring element (5) despite the stop projections (10, 12), and in that in the interlocking position of the fastener pin (3), which position is secured under the restoring force of the spring element (5), the first stop projection (10) is located at least in part in an arresting slot (15) of the shaped hole (7) of the first component (1), the arresting slot being allocated to the first stop projection.

2. Rotational fastener according to claim 1, characterized in that the shaped recess (13) of the shaped hole (7) of the first component (1) forms a stop surface (16) for the second stop projection (12) for limiting the rotary movement of the fastener pin (3) in the interlocking position.

3. Rotational fastener according to claim 1 or 2, characterized in that the stop projections (10, 12) are provided on the circumference of the pin shaft (6) such that they are diametrically opposed to each other.

4. Rotational fastener according to one or more of the preceding claims, characterized in that the first stop projection (10) has a smaller axial length than the second stop projection (12).

5. Rotational fastener according to one or more of the preceding claims, characterized in that the second stop projection (12) begins directly on the rear side of the pin head (4).

6. Rotational fastener according to one or more of the preceding claims, characterized in that the stop projections (10, 12) end at the same axial distance from the pin head (4).

7. Rotational fastener according to one or more of the preceding claims, characterized in that the fastener pin (3) is supported on the first component (1) such that it cannot be detached.

8. Rotational fastener according to claim 7, characterized in that the shaped hole (7) of the first component (1) has radial slot extensions (17, 18) to press the interlocking projections (9) of the fastener pin (3) through.

9. Rotational fastener according to claim 8, characterized in that the slot extensions (17, 18) taper conically from the outside to the inside of the first component (1).

10. Rotational fastener according to claim 8 or 9, characterized in that the one slot extension (17) forms the blocking slot (11) for the first stop projection (10) in the opening position of rest of the fastener pin (3) and the other slot extension (18) in continuation of the shaped recess (13) of the shaped hole (7) forms a stopping face (19) for the second stop projection (12) in the opening position of rest of the fastener pin (3).

11. Rotational fastener according to one or more of the preceding claims, characterized in that the stop projections (10, 12) are rounded at their free ends.

12. Rotational fastener according to one or more of the preceding claims, characterized in that the interlocking projections (9) have a contact bevel (21) at their rear interlocking edge (20).

13. Rotational fastener according to one or more of the preceding claims, characterized in that the interlocking projections (9) are rounded on their side facing the end of the pin shaft.

14. Rotational fastener according to one or more of the preceding claims, characterized in that the fastener pin (3) is conically tapered at its free end.

15. Rotational fastener according to one or more of the preceding claims, characterized in that the pin head (4) has working surfaces (22, 23) for pushing the fastener pin (3) against the restoring force of the spring element (5) and for turning the fastener pin (3) by means of a tool.

16. Rotational fastener according to claim 15, characterized in that the working surfaces (22, 23) are formed by a slot recess (24) of the pin head (4).

17. Rotational fastener according to claim 16, characterized in that the slot recess (24) is aligned with respect to the interlocking projections (9) or is at right angles to them.

18. Rotational fastener according to one or more of the preceding claims, characterized in that the first Component (1) has a depression (25) for receiving the pin head (4) certainly in the interlocking position of the fastener pin (3).

19. Rotational fastener according to claim 18, characterized in that the spring element (5) is constructed as a helical spring and is arranged in the depression (25) of the first component (1).

20. Rotational fastener according to one or more of the preceding claims, characterized in that the fastener pin (3) is manufactured in one part from plastics.

21. Rotational fastener according to one of claims 1 to 18, characterized in that the pin shaft (6) of the fastener pin (3) has a slot-like opening (26), arranged substantially at right angles to the centre axis (39), in which opening the interlocking part (28), constructed as a separate component, is inserted in a form-locking manner.

22. Rotational fastener according to claim 21, characterized in that the interlocking part (28) has a centre section (29) with a thickness (31) which is reduced gradually with respect to the thickness (34) of the interlocking projections (9), whereby the inside width (27) of the opening (26) substantially corresponds to the thickness (31) of the centre section (29).

23. Rotational fastener according to claim 22, characterized in that the interlocking projections (9) at the outer end have a thickness (30) substantially corresponding to the inside width (27) of the opening (26), which thickness increases continuously up to the thickness (34) when seen in the direction of the centre section.

24. Rotational fastener according to claim 22 or 23, characterized in that the height (32) of the opening (26) is adapted to the height (33) of the centre section (29) and possibly has slightly smaller values.

25. Rotational fastener according to one of claims 22 to 24, characterized in that the height (33) of the centre section (29) is dimensioned to be greater than the height (40) of the interlocking elements (9).

26. Rotational fastener according to one of claims 21 to 25, characterized in that the spring element (5) is constructed as a conical spring (36) and is arranged in the depression (25) of the first component (1).

27. Rotational fastener according to one of the preceding claims, characterized in that the upper side (42) of the pin head (4) is constructed to be inclined or arched with respect to the level underside (41) of the pin head (4).

28. Rotational fastener according to claim 27, characterized in that the upper side (42) of the pin head (4) is inclined at an angle with respect to the underside (41) of the pin head (4) and the angle of inclination (38) with respect to the interlocking projections (9) is oriented in such a way that in the interlocking position the form of the pin head (4) is adapted to the contour (37) of the first component (1).

## Revendications

1. Dispositif de fixation rotatif, notamment dispositif de fixation de type à quart de tour, pour fixer de manière démontable par exemple des éléments (1, 2) en forme de plaques, tels que par exemple un couvercle sur un boîtier, comportant un organe de fixation (3) qui prend appui par exemple avec sa tête (4), par l'intermédiaire d'un élément élastique (5), sur le premier élément (1), dont la tige (6) pénètre dans deux trous profilés (7, 8) mutuellement alignés dans les éléments (1, 2) et qui porte à son extrémité libre des saillies de verrouillage (9), de préférence diamétralement opposées, qui, lorsque le premier élément (1) est appliqué contre le second élément (2), peuvent être introduites dans le trou profilé (8) du second élément (2), pressées axialement dans le trou profilé (8) de l'autre élément (2), à l'encontre de la force de rappel de l'élément élastique (5), et amenées dans une position de verrouillage derrière l'autre élément (2) par une rotation consécutive de l'organe de fixation (3) d'un angle de par exemple 90°, caractérisé par le fait que la tige (6) de l'organe de fixation porte à distance de la tête (4) une première saille de butée (10) qui, lorsqu'on enfonce complètement l'organe de fixation (3) à l'encontre de la force de rappel de l'élément élastique (5) dans une position de repos ouverte, peut être dégagée d'une fente d'immobilisation (11) dans le trou profilé (7) du premier élément (1), par le fait que la tige (6) de l'organe de fixation porte une deuxième saillie de butée (12) qui commence à une distance plus faible de la tête (4) et qui, lorsqu'on enfonce l'organe de fixation (3) à l'encontre de la force de rappel de l'élément élastique (5), dans la position de repos ouverte, reste dans un évidement profilé (13) du trou (7) du premier élément (1) et ne permet une rotation consécutive de l'organe de fixation (3) que dans une direction, d'un angle prédéterminé, par exemple de 90°, jusqu'à une position de verrouillage, par le fait que le trou profilé (8) du second élément (2) présente des évidements (14) radiaux pour le passage des saillies de verrouillage (9) et présente ailleurs un diamètre plus réduit qui permet la rotation de l'organe de fixation (3), malgré les saillies de butée (10, 12), lorsque ledit organe de fixation est complètement enfoncé à l'encontre de la force de rappel de l'élément élastique (5) et par le fait que dans la position de verrouillage de l'organe de fixation (3) maintenue par la force de rappel de l'élément élastique (5), la première saillie de butée (10) se trouve au moins partiellement dans une fente de blocage (15) associée du trou profilé (7) dans le premier élément (1).

2. Dispositif de fixation selon la revendication 1, caractérisé par le fait que l'évidement profilé (13) du trou profilé (7) du premier élément (1) forme une surface de butée (16) pour la deuxième saillie de butée (12) pour limiter le mouvement de rotation de l'organe de fixation (3) dans la position de verrouillage.

3. Dispositif de fixation selon la revendication 1 ou 2, caractérisé par le fait que les saillies de butée (10, 12) sont prévues en des points diamétralement opposés sur la périphérie de la tige de fixation (6).

4. Dispositif de fixation selon une ou plusieurs des revendications précédentes, caractérisé par le fait que la première saillie de butée (10) a une longueur axiale plus faible que la deuxième saillie de butée (12).

5. Dispositif de fixation selon une ou plusieurs des revendications précédentes, caractérisé par le fait que la deuxième saillie de butée (12) commence immédiatement sur la face postérieure de la tête (4) de l'organe de fixation.

6. Dispositif de fixation selon une ou plusieurs des revendications précédentes, caractérisé par le fait que les saillies de butée (10, 12) se terminent à la même distance axiale de la tête (4) de l'organe de fixation.

7. Dispositif de fixation selon une ou plusieurs des revendications précédentes, caractérisé par le fait que l'organe de fixation (3) est tenu de manière imperdable sur le premier élément (1).

8. Dispositif de fixation selon la revendication 7, caractérisé par le fait que le trou profilé (7) du premier élément (1) comporte des parties élargies en forme de fentes (17, 18) radiales pour le passage des saillies de verrouillage (9) de l'organe de fixation (3).

9. Dispositif de fixation selon la revendication 8, caractérisé par le fait que les parties élargies en forme de fentes (17, 18) se rétrécissent en forme de cône de la face extérieure vers la face intérieure du premier élément (1).

10. Dispositif de fixation selon la revendication 8 ou 9, caractérisé par le fait que l'une (17) des parties élargies en forme de fentes constitue la fente de blocage (11) pour la première saillie de butée (10) dans la position de repos ouverte de l'organe de fixation (3) et l'autre partie élargie (18) en forme de fente, dans le prolongement de l'évidement profilé (13) du trou profilé (7), forme une surface de butée (19) pour la seconde saillie de butée (12) dans la position de repos ouverte de l'organe de fixation (3).

11. Dispositif de fixation selon une ou plusieurs des revendications précédentes, caractérisé par le fait que les saillies de butée (10, 12) sont arrondies au niveau de leur extrémité libre.

12. Dispositif de fixation selon une ou plusieurs des revendications précédentes, caractérisé par le fait que les saillies de verrouillage (9) sont d'une rampe (21) au niveau de leur bord de verrouillage (20) arrière.

13. Dispositif de fixation selon une ou plusieurs des revendications précédentes, caractérisé par le fait que les saillies de verrouillage (9) sont arrondies au niveau de leur extrémité tournée vers le bout de la tige de l'organe de fixation.

14. Dispositif de fixation selon une ou plusieurs des revendications précédentes, caractérisé par le fait que l'organe de fixation (3) se rétrécit en forme de cône à son extrémité libre.

15. Dispositif de fixation selon une ou plusieurs des revendications précédentes, caractérisé par le fait que la tête (4) de l'organe de fixation présente des surfaces d'application d'effort (22, 23) pour enfoncer l'organe de fixation (3) à l'encontre de la force de rappel de l'élément élastique (5) et pour tourner l'organe de fixation (3) à l'aide d'un outil.

16. Dispositif de fixation selon la revendication 15, caractérisé par le fait que les surfaces d'application d'effort (22, 23) sont formées d'un évidement (24) en forme de fente dans la tête (4) de l'organe de fixation.

17. Dispositif de fixation selon la revendication 16, caractérisé par le fait que l'évidement (24) en forme de fente est orienté dans la direction des saillies de verrouillage (9) ou est perpendiculaire à celles-ci.

18. Dispositif de fixation selon une ou plusieurs des revendications précédentes, caractérisé par le fait que le premier élément (1) présente une cavité (25) destinée à recevoir la tête (4) de l'organe de fixation tout au moins dans la position de verrouillage de l'organe de fixation (3).

19. Dispositif de fixation selon la revendication 18, caractérisé par le fait que l'élément élastique (5) se présente sous la forme d'un ressort hélicoïdal et est disposé dans la cavité (25) dans le premier élément (1).

20. Dispositif de fixation selon une ou plusieurs des revendications précédentes, caractérisé par le fait que l'organe de fixation (3) est réalisé d'une pièce en matière plastique.

21. Dispositif de fixation selon une ou plusieurs des revendications 1 à 18, caractérisé par le fait que la tige (6) de l'organe de fixation (3) présente une ouverture (26) en forme de trou oblong qui est disposé essentiellement perpendiculairement à l'axe médian (39) dans laquelle l'élément de verrouillage (28) réalisé sous forme d'élément séparé est inséré par complémentarité de formes.

22. Dispositif de fixation selon la revendication 21, caractérisé par le fait que l'élément de verrouillage (28) présente une partie médiane (29) dont l'épaisseur (31) décroît par paliers par rapport à l'épaisseur (34) des saillies de verrouillage (9), la section libre (27) des ouvertures (26) correspondant sensiblement à l'épaisseur (31) de la partie médiane (29).

23. Dispositif de fixation selon la revendication 22, caractérisé par le fait que les saillies de verrouillage (9) à l'extrémité extérieure présentent une épaisseur (30) qui correspond sensiblement à la section libre (27) de l'ouverture (26) et qui vu dans la direction de la partie médiane croît continument jusqu'à l'épaisseur (34).

24. Dispositif de fixation selon la revendication 22 ou 23, caractérisé par le fait que la hauteur (32) de l'ouverture (26) est adaptée à la hauteur (33) de la partie médiane (29) et présente le cas échéant des valeurs légèrement plus faibles.

25. Dispositif de fixation selon une des revendications 22 à 24, caractérisé par le fait que la hauteur (33) de la partie médiane (29) est supérieure à la hauteur (40) de l'élément de verrouillage (9).

26. Dispositif de fixation selon une des revendications 21 à 25, caractérisé par le fait que l'élément élastique (5) est agencé sous forme de ressort conique (36) et est disposé dans la cavité (25) du premier élément (1).

27. Dispositif de fixation selon une des revendications précédentes, caractérisé par le fait que la face supérieure (42) de la tête (4) de l'organe de fixation est inclinée ou est bombée par rapport à la face intérieure (41) plane de la tête (4) de l'organe de fixation.

28. Dispositif de fixation selon la revendication 27, caractérisé par le fait que la face supérieure (42) de la tête (4) de l'organe de fixation forme un angle avec la face inférieure (41) plane de la tête (4) et que l'angle d'inclinaison (38) est orienté par rapport aux saillies de verrouillage (9) de telle sorte que, dans la position de verrouillage, la forme de la tête (4) de l'organe de fixation soit adaptée au contour (37) du premier élément (1).
